**Europäisches Patentamt**

**European Patent Office**

**Office européen des brevets**

(19)

(11) Veröffentlichungsnummer: **0 012 189**
**B1**

# (12) EUROPÄISCHE PATENTSCHRIFT

(45) Veröffentlichungstag der Patentschrift:
01.02.84

(21) Anmeldenummer: **79104128.8**

(22) Anmeldetag: **24.10.79**

(51) Int. Cl.³: **G 02 B 7/26**

(54) Koppelelement zum Auskoppeln eines Lichtanteils aus einem einen Kern und einen Mantel aufweisenden Glasfaser-Lichtwellenleiter.

(30) Priorität: **29.11.78 DE 2851646**

(43) Veröffentlichungstag der Anmeldung:
**25.06.80 Patentblatt 80/13**

(45) Bekanntmachung des Hinweises auf die Patenterteilung:
**01.02.84 Patentblatt 84/5**

(84) Benannte Vertragsstaaten:
**FR GB**

(56) Entgegenhaltungen:
**DE - A - 2 611 011**
**DE - B - 2 203 140**

**Patents Abstracts of Japan Band 1, Nr. 145, 25. November 1977, Seite 7251 E 77**
**Patents Abstracts of Japan Band 2, Nr. 139, 17. November 1978, Seite 8619 E 78**
**Patents Abstracts of Japan Band 1, Nr. 129, 25. Oktober 1977, Seite 5861 E 77**

(73) Patentinhaber: **SIEMENS AKTIENGESELLSCHAFT, Berlin und München Wittelsbacherplatz 2, D-8000 München 2 (DE)**

(72) Erfinder: **Winzer, Gerhard, Dr., Günderodestrasse 16, D-8000 München 82 (DE)**
Erfinder: **Auracher, Franz, Dr., Stapferstrasse 4, D-8000 München 60 (DE)**

Koppelelement zum Auskoppeln eines Lichtanteils aus einem einen Kern
und einen Mantel aufweisenden Glasfaser-Lichtwellenleiter

Die vorliegende Erfindung betrifft ein Koppelelement nach dem Oberbegriff des Patentanspruchs 1.

Ein Koppelelement der genannten Art ist aus dem Abstract der JP-A-52 64 939 bekannt. Bei diesem Koppelelement weist der eine Lichtwellenleiter eine bis zu seiner Achse reichende seitliche Kerbe auf, deren eine Seitenfläche durch die teildurchlässige Spiegelschicht gebildet ist. Der abzweigende Glasfaser-Lichtwellenleiter ist am Ende keilförmig zugespitzt, derart, daß der Keil genau in die Kerbe paßt.

Solche Kerben und Keile müssen im Hinblick auf niedrig zu haltende Einfügeverluste sehr präzise gefertigt werden und erfordern daher einen relativ hohen Aufwand bei der Herstellung. Außerdem sind sie sehr empfindlich.

Es ist die Aufgabe der vorliegenden Erfindung, ein Koppelelement der eingangs genannten Art anzugeben, welches einfach herstellbar ist.

Diese Aufgabe wird durch die im kennzeichnenden Teil des Patentanspruchs 1 angegebenen Merkmale gelöst.

Durch diese Lösung werden die Herstellung des optischen Wellenleiters und die Herstellung des Tragkörpers mit dem darin befestigten Wellenleiter zu einem einzigen Verfahrensschritt, nämlich dem Ziehen einer Glasfaser mit dickem Mantel, komprimiert. Dabei bildet die Herstellung einer solchen Faser keinerlei technologische Schwierigkeiten, sie kann mit dem herkömmlichen Doppeltiegelverfahren mit entsprechend großer Ziehdüse im Außentiegel oder mit der herkömmlichen Stabmethode aus einer entsprechenden Vorform problemlos gezogen werden. Es kann jedes Koppelelement, welches in einem Träger befestigte optische Wellenleiter aufweist, prinzipiell durch Verwendung der Glasfaser mit dem dicken Mantel zu einem vorgeschlagenen Koppelelement umgestaltet werden. Die Kern-Mantel-Glasfaser mit dem dicken Mantel weist ausreichende Festigkeit für Schleif- und Poliervorgänge auf und braucht nicht zusätzlich in eine Kapillare eingebettet zu werden.

Auch sind bei dem erfindungsgemäßen Koppelelement keine aufwendig herzustellende Kerben oder Keile notwendig.

Es ist darauf hinzuweisen, daß ein Glasfaser-Lichtwellenleiter mit einem relativ zum Kern sehr dicken Mantel von mindestens 1 mm Durchmesser bereits aus der DE-AS 2 203 140 bekannt ist.

Ein besonderer Vorteil eines vorgeschlagenen Koppelelements liegt darin, daß es vorteilhaft zum Auskoppeln eines Lichtanteils aus einer Monomode-Faser mit Hilfe eines Strahlteilerspiegels geeignet ist.

Es tritt nämlich häufig das Problem auf, aus einer durchgehenden Monomode-Faser einen kleinen Lichtanteil abzuzapfen, um beispielsweise den Signalpegel in der Faser zu messen, damit dieser über eine Regelschleife konstant gehalten werden kann. Bisher war dafür ein Koppelelement, welches mit Hilfe eines Strahlteilers aus- oder einkoppelt, nicht besonders vorteilhaft, weil bei Monomode-Fasern der Aus- bzw. Einkoppelwirkungsgrad relativ schlecht ist.

Auf ein erfindungsgemäßes Koppelelement mit einer Monomode-Faser ist Anspruch 2 gerichtet.

Diese Ausführungsform weist einen guten Auskoppelwirkungsgrad auf, wobei dieser Wirkungsgrad um so höher ist, je größer der Kerndurchmesser und Akzeptanzwinkel der Multimode-Faser sind. Das Element eignet sich hervorragend für die vorstehend angegebenen Regelzwecke, weil dabei wiederum von Vorteil ist, daß die abgezweigte Lichtleistung in den meisten Fällen nur über eine relativ kurze Distanz zum Detektor geführt werden muß.

Es ist auch in diesem Zusammenhang darauf hinzuweisen, daß aus der DA-AS 2 203 140 bereits eine Monomode-Glasfaser mit einem dikken Mantel von wenigstens 1 mm Durchmesser bekannt ist.

Ein die Erfindung benutzendes Anwendungsbeispiel wird anhand der Figuren im folgenden näher erläutert. Es zeigt

Figur 1 in schematischer Darstellung eine Anordnung, bei der ein Teil des in einer Monomode-Faser geführten Lichtes ausgekoppelt und einem Detektor zugeführt wird, der als Istwertgeber für eine Regelschaltung dient, über die der Diodenstrom für eine Laserdiode so gesteuert wird, daß der Leistungspegel in der Faser trotz Alterung der Laserdiode konstant bleibt und

Figur 2 in vergrößerter Darstellung die Koppelsstelle, bei der Licht aus der Monomode-Faser über den Strahlteilerspiegel aus der Monomode-Faser ausgekoppelt und in die Multimode-Faser wieder eingekoppelt wird.

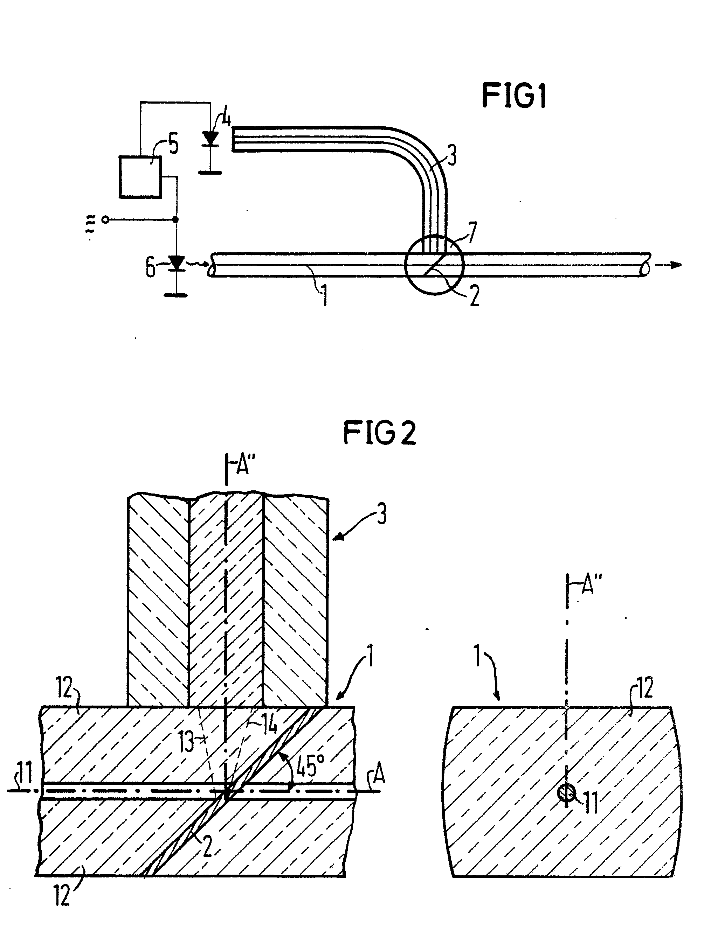

In der Figur 1 ist die Monomode-Faser mit 1 bezeichnet. In der Faser 1 ist ein schichtförmiger Strahlteilerspiegel 2 angeordnet, der vorzugsweise einen Winkel von 45° mit der Faserachse einschließt. An dieser Stelle stößt an die Faser 1 stumpf eine Multimode-Faser, die zum lichtempfindlichen Detektor 4 führt. Dieser Detektor 4 ist an eine Regelschaltung 5 gekoppelt und liefert den Istwert für diese. Die Regelschaltung 5 steuert den Strom für die Laserdiode 6, deren Licht in die Monomode-Faser eingekoppelt wird so, daß der Leistungspegel in der Faser trotz Alterung der Laserdiode konstant bleibt.

In der Figur 2 ist die Koppelstelle, die in der Figur 1 von einem Kreis 7 umgeben ist, vergrößert dargestellt, aus der sich deutlich die spezielle Kopplungsart sowie die Besonderheit der Monomode-Faser ergibt. Die Kopplungsstelle ist als Schnitt längs der Achsen der beiden Fasern 1 und 3 dargestellt, und rechts neben der im Längsschnitt dargestellten Monomode-Faser 1 ist noch deren Querschnitt dargestellt.

Die erste Besonderheit liegt nun darin, daß die Monomode-Faser 1 aus einer einzigen Kern-Mantel-Glasfaser gebildet ist, bei welcher der Manteldurchmesser mindestens 1 mm beträgt, so daß der Mantel relativ zum Kern sehr dick ist. Da der Durchmesser des Kerns, der in der Figur 2 mit 11 bezeichnet ist, im Mikrometerbereich liegt und der Durchmesser des Mantels, der in der Figur 2 mit 12 bezeichnet ist, im Millimeterbereich liegt, ist eine maßstabsgetreue Darstellung nicht möglich.

In der Monomode-Faser 1 ist schräg zur Faserachse A ein schichtförmiger Strahlteilerspiegel 2 angeordnet, der einenTeil des im Kern 11 geführten Lichts reflektiert und aus der Faser her auslenkt. Die Orientierung des Strahlteilers ist dabei zweckmäßigerweise so gewählt, daß seine Flächennormale in der von den beiden sich schneidenden und senkrecht aufeinanderstehenden Achsen A und A″ aufgespannten Ebene liegt. Die beiden durch die Strahlteilerspiegel getrennten Teile der Monomode-Faser 1 grenzen stumpf an diesen.

Der Strahlteilerspiegel bewirkt, daß ein Anteil des im Kern 11 der Monomode-Faser 1 geführten Lichts nach der Seite herausreflektiert wird. In der Figur 2 ist angenommen, daß sich das Licht im Kern 11 von links nach rechts ausbreitet, so daß der reflektierte Teil bei der dortigen Orientierung des Strahlteilerspiegels 2 nach oben sich ausbreitet. Der reflektierte Lichtanteil breitet sich innerhalb eines Kegels aus, der in der Figur 2 durch die gestrichelten Begrenzungslinien 13 und 14 angedeutet ist.

An der Stelle, wo das vom Strahlteilerspiegel reflektierte und daher ausgekoppelte Licht aus dem Mantel 12 der Monomode-Faser 1 austritt, ist als zweite Besonderheit die Multimode-Faser 3 mit einer ihrer Stirnflächen stumpf auf den Mantel 12 aufgesetzt. Zweckmäßigerweise weist dazu der Mantel der Monomode-Faser 1 eine plane Fläche auf, die durch Planschliff bei der Dicke des Mantels leicht erzeugbar ist.

Es ist leicht einzusehen, daß es für den Kopplungswirkungsgrad günstig ist, wenn die Achse A″ der Multimode-Faser 3 mit der Achse des Kegels, in dem sich das reflektierte Licht ausbreitet, zusammenfällt.

Zweckmäßigerweise besteht auch die Multimode-Faser 3 aus einer Faser mit einem Mantel von mindestens 1 mm Durchmesser, also mit im Vergleich zum Kern sehr dicken Mantel. Sie kann aber auch aus einer herkömmlichen Kern-Mantel-Glasfaser bestehen, die mittels einer Haltevorrichtung auf der Monomode-Faser 1 gehalten ist.

Die Herstellung einer Kern-Mantel-Glasfaser mit im Vergleich zum Kern sehr dicken Mantel kann ohne weiteres durch die herkömmlichen Herstellungsverfahren, wie beispielsweise dem Doppeltiegelverfahren oder der Stabmethode hergestellt werden. Beim Doppeltiegelverfahren braucht nur das Verhältnis der Ziehdüsen im Innen- bzw. Außentiegel und bei der Stabmethode das Verhältnis von Kerndurchmesser zum Außendurchmesser genügend groß gewählt werden.

Die Monomode-Faser 1 mit dem Strahlteilerspiegel 2 kann selbstjustierend hergestellt werden. Dazu wird die Monomode-Faser durch einen schräg zur Achse A geführten Schnitt in zwei Teile zerlegt. Dies ist ohne weiteres möglich, weil die Faser aufgrund des dicken Mantels ausreichend Festigkeit aufweist. Der Schnitt wird dabei im Winkel von 45° zur Achse A geführt. Die Schnittflächen werden poliert und dadurch auf optische Qualität gebracht. Auf eine der beiden polierten Schnittflächen wird das schichtförmige Strahlteilerelement aufgebracht, beispielsweise durch Bedampfen. Die beiden Faserteile werden dann wieder zusammengebracht und miteinander verklebt. Dies geschieht vorteilhafterweise mittels einer selbstjustierenden Methode, bei der die beiden Faserteile auf eine ebene Oberfläche eines mit einem geradlinig verlaufenden Anschlags versehenen Justierkörpers so gelegt werden, daß sie am Anschlag anliegen und die Schnittflächen parallel zueinander verlaufen. Die beiden Faserteile werden dann durch Verschieben längs des Anschlags zusammengebracht und mittels eines optischen Klebers miteinander verbunden. Es ist für dieses Verfahren zweckmäßig, wenn der Fasermantel planparallele Flächen aufweist, welche sich über die ganze Länge der Faser erstrecken, wie es in der Figur 2 im Querschnitt dargestellt ist. Die planparallelen Flächen und das schichtförmige Strahlteilerelement sind dabei zweckmäßigerweise so orientiert, daß ihre Flächennormalen in einer Ebene liegen, welche von den beiden Achsen A und A″ aufgespannt wird. Bei der selbstjustierenden Herstellung der Monomode-Faser mit dem Strahlteilerspiegel liegt dabei eine der beiden planparallelen Flächen auf der ebenen Oberfläche des Justierkörpers auf, während eine der verbliebenen gekrümmten Flächen am Anschlag anliegt. Außerdem wird auf eine der beiden planparallelen Flächen die Multimode-Faser aufgesetzt.

Auf die gleiche Weise wie die Monomode-Faser mit dem Strahlteilerspiegel hergestellt wird, kann eine Multimode-Faser mit Strahlteilerspiegel hergestellt werden. Es können so alle Koppelelemente hergestellt werden, welche Strahlteilerspiegel oder frequenzselektive Strahlteilerfilter benutzen.

**Patentansprüche**

1. Koppelelement zum Auskoppeln eines Lichtanteils aus einem einen Kern und einen Mantel aufweisenden Glasfaser-Lichtwellenleiter mit einer in dem einen Lichtwellenleiter schräg zu dessen Achse angeordneten teildurchlässigen Spiegelschicht und mit einem auf dem einen Lichtwellenleiter im Bereich der Spiegelschicht seitlich aufgesetzten, ebenfalls einen Kern und einen Mantel aufweisenden, abzweigenden Glasfaser-Lichtwellenleiter, gekennzeichnet durch die Kombination eines einen relativ zum Kern sehr dicken Mantel von mindestens 1 mm Durchmesser aufweisenden Glasfaser-Lichtwellenleiters als dem einen Lichtwellenleiter (1) mit einer Multimode-Glasfaser als dem abzweigenden Lichtwellenleiter (3), die auf eine auf dem dicken Mantel (12) des einen Lichtwellenleiters (1) ausgebildete plane und achsparallele Fläche stumpf aufgesetzt ist.

2. Koppelelement nach Anspruch 1, dadurch gekennzeichnet, daß die Glasfaser mit dem relativ zum Kern dicken Mantel von wenigstens 1 mm Durchmesser eine Monomode-Glasfaser ist.

## Claims

1. A coupling element for the output-coupling of a light fraction from a glass fibre light waveguide having a core and a casing, comprising a semitransparent reflective layer, which is arranged in the one light waveguide obliquely to the axis thereof, and a branching glass fibre light waveguide, which is applied laterally to the one light waveguide in the region of the reflective layer and which also has a core and a casing, characterised by the combination of a glass fibre light waveguide which has a very thick casing relative to the core of at least 1 mm diameter as the one light waveguide (1), and a multimode glass fibre as the branching light waveguide (3) which is applied to a plane surface parallel to the axis formed on the thick casing (12) of the one light waveguide (1), so as to be flush therewith.

2. A coupling element as claimed in Claim 1, characterised in that the glass fibre which has a thick casing relative to the core of at least 1 mm diameter, is a monomode glass fibre.

## Revendications

1. Elément coupleur pour dériver une fraction de lumière d'un guide d'ondes lumineuses à fibre de verre comportant un noyau et une gaine, qui comprend une couche réfléchissante semi-transparente disposée dans un premier guide d'ondes lumineuses, obliquement par rapport à son axe, et un guide d'ondes lumineuses à fibre de verre de dérivation qui comporte également un noyau et une gaine et qui est monté latéralement sur le premier guide d'ondes lumineuses dans la région de la couche réfléchissante, caractérisé par la combinaison d'un guide d'ondes lumineuses à fibre de verre comportant une gaine, d'au moins 1 mm de diamètre, très épaisse par rapport au noyau en tant que premier guide d'ondes lumineuses (1), avec une fibre de verre multimode, en tant que guide d'ondes lumineuses de dérivation (3), qui est montée bout à bout sur une surface plane et parallèle à l'axe formée sur la gaine épaisse (12) du premier guide d'ondes lumineuses (1).

2. Elément de couplage suivant la revendication 1, caractérisé par le fait que la fibre de verre qui possède une gaine, d'au moins 1 mm de diamètre, épaisse par rapport au noyau est une fibre de verre monomode.

# FIG1

# FIG 2